# FASCICULE DE BREVET EUROPEEN

(11) **EP 1 121 748 B1**
(45) Date de publication et mention de la délivrance du brevet: **22.01.2003**
(21) Numéro de dépôt: 99947526.2
(22) Date de dépôt: 11.10.1999
(51) Int. Cl.: H02K 21/24, H01F 7/14

(54) **ACTIONNEUR MAGNETIQUE ROTATIF**
MAGNETISCHER DREHAKTUATOR
ROTARY MAGNETIC ACTUATOR

(30) Priorité: 12.10.1998 FR 9812730
(43) Date de publication de la demande: 08.08.2001
(73) Titulaire: Johnson Controls Automotive Electronics, 95520 Osny (FR)
(72) Inventeur: VEYNE, Stéphane, F-63100 Clermont-Ferrand (FR)
(74) Mandataire: Bloch, Gérard
(86) Numéro de dépôt international: FR9902432
(87) Numéro de publication internationale: WO00022720

(56) Documents cités:
- BE-A- 516 579
- FR-A- 2 717 947
- US-A- 4 151 499
- PATENT ABSTRACTS OF JAPAN vol. 010, no. 113 (E-399), 26 avril 1986 (1986-04-26) & JP 60 249859 A (YOSHITERU TAKAHASHI), 10 décembre 1985 (1985-12-10)

## Description

La présente invention concerne un actionneur magnétique rotatif du type comportant un stator à P paires de pôles, comprenant un circuit magnétique statorique en un matériau ferromagnétique doux et présentant des épanouissements polaires et au moins une bobine électrique d'excitation, et un rotor comprenant un circuit magnétique rotorique en un matériau ferromagnétique doux qui est situé en regard desdits épanouissements polaires du circuit magnétique statorique et qui est solidaire d'un arbre axial, le circuit magnétique rotorique comportant un aimant annulaire multipolaire à P paires de pôles.

On connaît un tel actionneur par le document FR-A-2717947. Les deux circuits magnétiques, fixe et mobile, ainsi agencés coopèrent magnétiquement dans la région d'entrefer crée entre les deux surfaces actives magnétiques respectives comportant chacune P paires de pôles. L'interaction des deux champs magnétiques créés respectivement par le bobinage et par les aimants engendre des forces électromagnétiques variables suivant la position relative des deux systèmes de pôles, qui exercent des couples entre les deux circuits magnétiques. Il en résulte une possibilité de déplacement relatif limité des deux circuits, et l'ensemble ainsi constitué génère la fonction de moteur, ou d'actionneur.

Le document précité décrit un certain nombre de modes de réalisation de tels actionneurs. Dans tous les cas, le stator de ces actionneurs présente un noyau central cylindrique sur lequel la bobine d'excitation est bobinée en un enroulement également cylindrique.

Bien que donnant généralement satisfaction, ces actionneurs présentent l'inconvénient d'inclure dans leur volume de l'espace libre. Cet espace libre est nuisible, dans la mesure où il intervient dans l'encombrement extérieur de l'actionneur mais où il n'est pas utilisé pour la circulation du flux magnétique, et donc pour la création de couple. En outre, l'agencement des actionneurs connus entraîne, au niveau des épanouissements précités, une restriction de la section de passage du flux qui limite ce dernier. Les actionneurs électromagnétiques rotatifs de l'art antérieur présentent donc des problèmes de saturation magnétique.

La présente invention vise à pallier ces inconvénients.

Plus particulièrement, l'invention a notamment pour but de fournir des actionneurs magnétiques rotatifs pouvant fournir des couples plus élevés pour un encombrement donné, ou présentant un plus faible encombrement pour un couple maximum prédéterminé.

A cet effet, l'invention a pour objet un actionneur magnétique rotatif du type comportant un stator à P paires de pôles, comprenant un circuit magnétique statorique en un matériau ferromagnétique doux et présentant des épanouissements polaires et au moins une bobine électrique d'excitation, et un rotor comprenant un circuit magnétique rotorique en un matériau ferromagnétique doux qui est situé en regard desdits épanouissements polaires du circuit magnétique statorique et qui est solidaire d'un arbre axial, le circuit magnétique rotorique comportant un aimant annulaire multipolaire à P paires de pôles, dans lequel ledit circuit magnétique statorique présente un noyau central sur lequel la bobine d'excitation est bobinée, caractérisé par le fait que ledit noyau et la bobine d'excitation présentent une section transversale non circulaire en forme de polygone occupant sensiblement toute la surface laissée libre par le reste du circuit magnétique statorique.

Un premier avantage de l'invention réside dans le fait qu'il n'existe sensiblement plus d'espace vide inutile à l'intérieur de l'actionneur selon l'invention. La section transversale de l'actionneur est occupée soit par la bobine d'excitation, soit par le circuit magnétique statorique, y compris par le noyau. Un maximum de cette section est ainsi utilisé pour conduire le flux magnétique.

Un autre avantage important de l'invention résulte du fait qu'elle permet d'augmenter la section de passage du flux magnétique à la jonction entre le noyau et ses épanouissements. En effet, le noyau possède localement un plus grand diamètre, au niveau des angles du polygone précité. Les épanouissements ont donc en ces emplacements une inclinaison moindre par rapport à l'axe du noyau, ce qui permet de leur donner une plus grande épaisseur.

De préférence, ledit polygone a de préférence ses côtés arrondis.

Dans le cas où l'actionneur selon l'invention possède une ou deux paires de pôles, ledit polygone côtés arrondis est avantageusement une ellipse.

Dans le cas où l'actionneur selon l'invention possède trois paires de pôles, ledit polygone côtés arrondis est avantageusement un triangle équilatéral.

Dans le cas où l'actionneur selon l'invention possède quatre paires de pôles, ledit polygone côtés arrondis est avantageusement un carré.

Dans le cas où l'actionneur selon l'invention possède P paires de pôles, ledit polygone côtés arrondis est avantageusement un polygone à 2P côtés.

Dans un mode de réalisation particulier, ledit circuit magnétique statorique comprend ledit noyau en position centrale et comportant P/2 pôles formés de P/2 épanouissements dirigés vers l'extérieur, et P/2 colonnes extérieures comportant chacune un pôle formé d'un épanouissement dirigé vers l'intérieur, la section transversale dudit noyau et de ladite bobine d'excitation formant les côtés dudit polygone angulairement en vis-à-vis desdites colonnes extérieures et les angles dudit polygone angulairement entre lesdites colonnes extérieures.

Plus particulièrement, ledit circuit magnétique statorique peut comprendre une embase support de colonnes, ladite embase étant dimensionnée de manière à permettre le passage du flux magnétique.

Egalement dans un mode de réalisation particulier de l'invention, le noyau comporte un alésage dans lequel sont montés des paliers support d'arbre.

Un aimant annulaire multipolaire de rappel à P paires de pôles peut être disposé entre lesdits épanouissements du circuit magnétique statorique et ledit aimant annulaire multipolaire à P paires de pôles du circuit magnétique rotorique.

Cet aimant annulaire multipolaire de rappel permet de produire, par interaction avec l'aimant annulaire multipolaire à P paires de pôles du circuit magnétique rotorique, un couple en l'absence de courant, produisant un effet de rappel.

Un tel actionneur peut comporter des moyens de réglage de la position angulaire dudit aimant annulaire multipolaire de rappel.

On réalise ainsi une position de stabilité réglable.

On décrira maintenant, à titre d'exemple non limitatif, un mode de réalisation particulier de l'invention, en référence aux dessins schématiques annexés dans lesquels :
- la figure 1 est une vue en perspective éclatée d'un actionneur selon un premier mode de réalisation de l'invention, avec son rotor enlevé ;
- la figure 2 en est une vue de dessus ;
- la figure 3 est une vue en coupe selon la ligne III-III de la figure 2 ;
- la figure 4 est une vue en coupe selon la ligne IV-IV de la figure 2 ; et
- la figure 5 est une vue similaire à celle de la figure 1 d'un actionneur selon un deuxième mode de réalisation de l'invention.

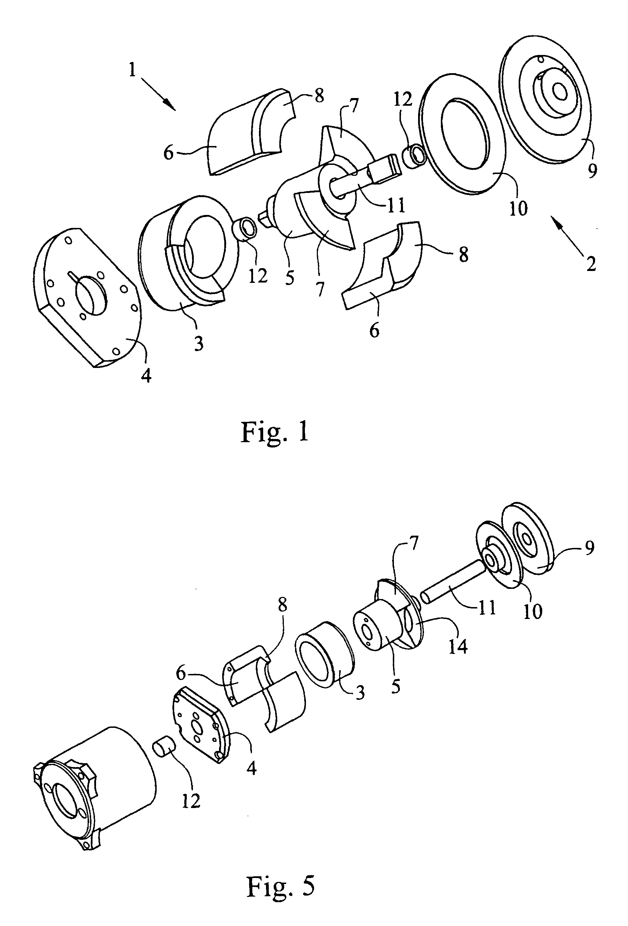

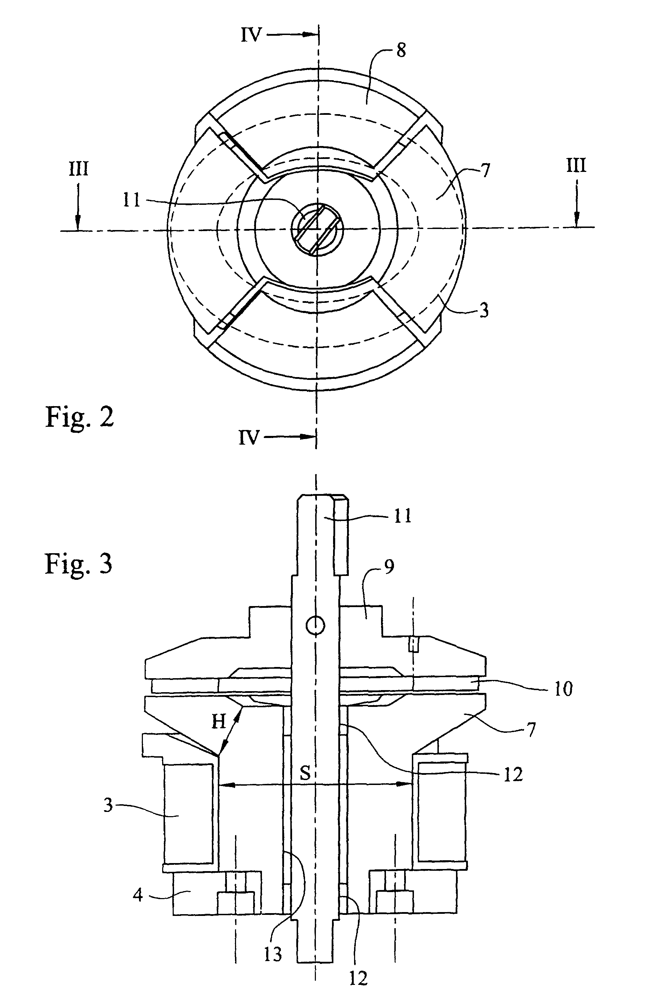

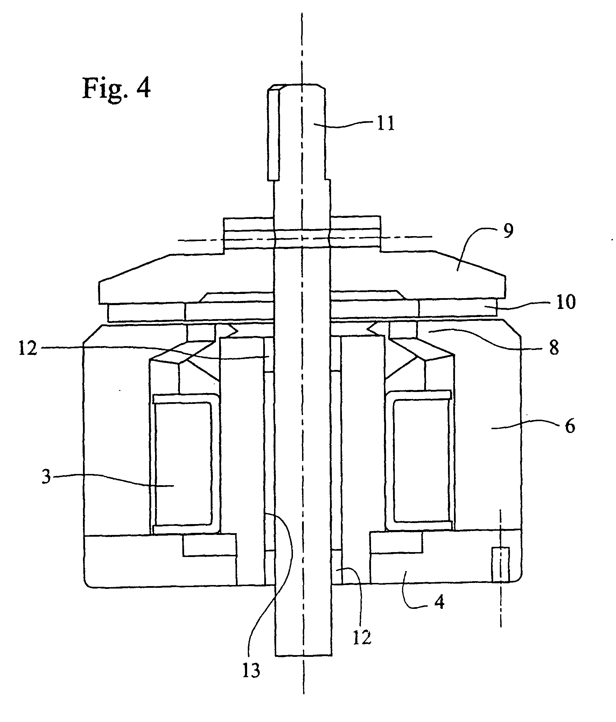

L'actionneur des figures 1 à 4 comprend d'une manière générale un stator 1 et un rotor 2.

Le stator 1 est essentiellement constitué d'un circuit magnétique statorique en matériau ferromagnétique doux et d'une bobine électrique d'excitation 3. Le circuit magnétique statorique comprend une embase 4, sur laquelle sont montés, par exemple vissés, un noyau central 5 et des colonnes extérieures 6, dans la cas présent au nombre de deux. La bobine d'excitation 3 est bobinée sur le noyau central.

Le noyau central 5 forme, à son extrémité opposée à l'embase 4, deux épanouissements 7 dirigés vers l'extérieur. De même, chaque colonne extérieure 6 forme, à son extrémité opposée à l'embase 4, un épanouissement 8 dirigé vers l'intérieur. Ainsi, les épanouissements 7 sont alternés avec les épanouissements 8 pour former les deux paires de pôles du circuit magnétique statorique.

Le rotor 2 est essentiellement constitué d'un circuit magnétique rotorique 9 en matériau ferromagnétique doux et sensiblement en forme de disque, et d'un aimant permanent 10 annulaire à deux paires de pôles, porté par le circuit 9. L'aimant annulaire 10 et le circuit magnétique statorique 9 sont coaxiaux au rotor 1 et sont disposés en regard des épanouissements 7 et 8 de ce dernier.

Un arbre de sortie 11 est monté solidaire du rotor 2 sur deux paliers 12. Les paliers 12 sont logés dans un alésage 13 percé dans le noyau 5. il est ainsi possible de prévoir deux sorties d'arbre.

Selon l'invention, le noyau central 5 et la bobine 3 ont une section transversale elliptique. Le petit axe de l'ellipse s'étend, en position neutre, entre les deux colonnes 6. Le grand axe de l'ellipse s'étend dans la direction des épanouissements 7 du noyau central, entre les colonnes 6.

Ainsi, la section transversale du noyau central 5 et de la bobine d'excitation 3 occupe, vers les extrémités de son grand axe, les espaces compris entre les deux colonnes 6, laissés vides dans l'art antérieur. La section de passage S du flux magnétique est donc augmentée.

Par ailleurs, du fait que le diamètre du noyau central 5 est plus important au niveau des épanouissements 7, ces derniers sont moins perpendiculaires à l'axe du dispositif et leur section minimale H est augmentée, ce qui a pour effet d'augmenter de façon correspondante le flux magnétique à saturation.

La forme de l'embase 4 et son épaisseur sont déterminées de manière à pouvoir assurer la circulation du flux magnétique maximum admissible dans les autres parties du circuit magnétique statorique. Dans le cas présent, l'embase 4 est sensiblement de forme elliptique avec son grand axe perpendiculaire à celui du noyau central 5 et de !a bobine d'excitation 3.

Ce qui vient d'être décrit peut être généralisé à un nombre quelconque de paires de pôles.

Pour une seule paire de pôles, le noyau et la bobine sont également elliptiques, avec l'embase elliptique et son grand axe parallèle à celui du noyau et de la bobine.

Pour trois paires de pôles, les sections sont sensiblement en forme de triangle équilatéral de même que l'embase. Cette dernière est décalée de π/3 par rapport au noyau.

Pour quatre paires de pôles, les sections sont sensiblement en forme de carré de même que l'embase. Cette dernière est décalée de π/4 par rapport au noyau.

D'une manière générale, pour P paires de pôles, les sections sont sensiblement en forme de polygone à 2P côtés de même que l'embase. Cette dernière est décalée de π/P par rapport au noyau.

Dans la figure 5, qui représente un autre mode de réalisation, les mêmes références que dans la figure 1 ont été utilisées pour désigner les éléments homologues, qui ne seront donc pas décrits.

Dans ce mode de réalisation, un aimant annulaire 14 à quatre pôles a été ajouté coaxialement à l'arbre 11 en vis-à-vis des épanouissements 7 et 8. Cet aimant a sa position angulaire réglable, par des moyens non représentés, de manière à réaliser une position de stabilité réglable.

## Revendications

1. Actionneur magnétique rotatif du type comportant un stator (1) à P paires de pôles, comprenant un circuit magnétique statorique en un matériau ferromagnétique doux et présentant des épanouissements polaires (7, 8) et au moins une bobine électrique (3) d'excitation, et un rotor (2) comprenant un circuit magnétique (9) rotorique en un matériau ferromagnétique doux qui est situé en regard desdits épanouissements polaires du circuit magnétique statorique et qui est solidaire d'un arbre axial, le circuit magnétique rotorique comportant un aimant annulaire (10) multipolaire à P paires de pôles, dans lequel ledit circuit magnétique statorique présente un noyau central (5) sur lequel la bobine d'excitation (3) est bobinée, **caractérisé par le fait que** ledit noyau et la bobine d'excitation présentent une section transversale non circulaire en forme de polygone occupant sensiblement toute la surface laissée libre par le reste du circuit magnétique statorique.

2. Actionneur selon la revendication 1, dans lequel ledit polygone a ses côtés arrondis.

3. Actionneur selon la revendication 2, possédant une ou deux paires de pôles, et dans lequel ledit polygone côtés arrondis est une ellipse.

4. Actionneur selon la revendication 2, possédant trois paires de pôles, et dans lequel ledit polygone côtés arrondis est un triangle équilatéral.

5. Actionneur selon la revendication 2, possédant quatre paires de pôles, et dans lequel ledit polygone côtés arrondis est un carré.

6. Actionneur selon la revendication 2, possédant P paires de pôles, et dans lequel ledit polygone côtés arrondis est un polygone à 2P côtés.

7. Actionneur selon l'une quelconque des revendications 1 à 6, dans lequel ledit circuit magnétique statorique comprend ledit noyau (5) en position centrale et comportant P/2 pôles formés de P/2 épanouissements (7) dirigés vers l'extérieur, et P/2 colonnes extérieures (6) comportant chacune un pôle formé d'un épanouissement (8) dirigé vers l'intérieur, la section transversale dudit noyau et de ladite bobine d'excitation formant les côtés dudit polygone angulairement en vis-à-vis desdites colonnes extérieures et les angles dudit polygone angulairement entre lesdites colonnes extérieures.

8. Actionneur selon la revendication 7, dans lequel ledit circuit magnétique statorique comprend une embase (4) support de colonnes, ladite embase étant dimensionnée de manière à permettre le passage du flux magnétique.

9. Actionneur selon l'une quelconque des revendications 1 à 8, dans lequel le noyau comporte un alésage (13) dans lequel sont montés des paliers (12) support d'arbre.

10. Actionneur selon l'une quelconque des revendications 1 à 9, comportant un aimant annulaire (14) multipolaire de rappel à P paires de pôles disposé entre lesdits épanouissements du circuit magnétique statorique et ledit aimant annulaire (10) multipolaire à P paires de pôles du circuit magnétique rotorique.

11. Actionneur selon la revendication 10, comportant des moyens de réglage de la position angulaire dudit aimant annulaire multipolaire de rappel.

## Patentansprüche

1. Rotationsmagnetschalter des Typs mit einem Stator (1) mit P Polpaaren, der einen Statormagnetkreis aus weichem ferromagnetischem Material mit Polausbauchungen (7, 8) und mindestens eine elektrische Erregerspule (3) aufweist, und einem Rotor (2) mit einem Rotormagnetkreis (9) aus weichem ferromagnetischem Material, der sich gegenüber den besagten Polausbauchungen des Statormagnetkreises befindet und mit einer axialen Welle verbunden ist, wobei der Rotormagnetkreis einen mehrpoligen, ringförmigen Magneten (10) mit P Polpaaren umfasst, in dem der besagte Statormagnetkreis einen Mittelkern (5) aufweist, auf dem die Erregerspule (3) aufgewickelt ist, **dadurch gekennzeichnet, dass** der besagte Kern und die Erregerspule einen nicht umlaufenden Querschnitt in Form eines Polygons aufweisen, der etwa die gesamte vom Rest des Statormagnetkreises freigelassene Fläche einnimmt.

2. Schalter nach Anspruch 1, bei dem das besagte Polygon abgerundete Seiten hat.

3. Schalter nach Anspruch 2, mit einem oder zwei Polpaaren, und bei dem das besagte Polygon mit abgerundeten Seiten eine Ellipse ist.

4. Schalter nach Anspruch 2, mit drei Polpaaren, und bei dem das besagte Polygon mit abgerundeten Seiten ein gleichseitiges Dreieck ist.

5. Schalter nach Anspruch 2, mit vier Polpaaren, und bei dem das besagte Polygon mit abgerundeten Seiten ein Quadrat ist.

6. Schalter nach Anspruch 2 mit P Polpaaren, und bei dem das besagte Polygon mit abgerundeten Seiten ein Polygon mit 2P Seiten ist.

7. Schalter nach einem der Ansprüche 1 bis 6, bei dem der besagte Statormagnetkreis den besagten Kern (5) in mittlerer Position umfasst sowie P/2 Pole, die durch P/2 nach außen gerichtete Ausbauchungen (7) gebildet werden, und P/2 externe Säulen (6), die jeweils einen aus einer nach innen gerichteten Ausbauchung (8) gebildeten Pol umfassen, wobei der Querschnitt des besagten Kerns und der besagten Erregerspule die Seiten des besagten Polygons bilden, im Winkel gegenüber den besagten externen Säulen, und die Winkel des besagten Polygons im Winkel zwischen den besagten externen Säulen.

8. Schalter nach Anspruch 7, bei dem der besagte Statormagnetkreis einen Säulentragsockel (4) umfasst, wobei der besagte Sockel so bemessen ist, dass er den Durchlauf des Magnetflusses gestattet.

9. Schalter nach einem der Ansprüche 1 bis 8, bei dem der Kern eine Bohrung (13) aufweist, in der Wellentraglager (12) montiert sind.

10. Schalter nach einem der Ansprüche 1 bis 9, mit einem mehrpoligen ringförmigen Rückstellmagneten (14) mit P Polpaaren, der zwischen den besagten Ausbauchungen des Statormagnetkreises und dem besagten mehrpoligen ringförmigen Magneten (10) mit P Polpaaren des Rotormagnetkreises angeordnet ist.

11. Schalter nach Anspruch 10, mit Einstellmitteln der Winkelposition des besagten mehrpoligen ringförmigen Rückstellmagneten.

## Claims

1. A rotary magnetic actuator of the type having a stator (1) with P pairs of poles, comprising a magnetic stator circuit made from a soft ferromagnetic material and having polar splays (7, 8) and at least one electrical excitation coil (3), and a rotor (2) comprising a magnetic rotor circuit (9) made from a soft ferromagnetic material which is situated opposite the said polar splays of the stator magnetic circuit and which is fixed to an axial shaft, the magnetic rotor circuit including an annular multipole magnet (10) with P pairs of poles, in which the said magnetic stator circuit has a central core (5) on which the excitation coil (3) is wound, **characterised by** the fact that the said core and the excitation coil have a non-circular transverse section in the form of a polygon occupying substantially the entire surface left free by the rest of the magnetic stator circuit.

2. An actuator according to Claim 1, in which the said polygon has its sides rounded.

3. An actuator according to Claim 2, having one or two pairs of poles, and in which the said rounded-side polygon is an ellipse.

4. An actuator according to Claim 2, having three pairs of poles, and in which the said rounded-side polygon is an equilateral triangle.

5. An actuator according to Claim 2, having four pairs of poles, and in which the said rounded-side polygon is a square.

6. An actuator according to Claim 2, having P pairs of poles, and in which the said rounded-side polygon is a polygon with 2P sides.

7. An actuator according to any one of Claims 1 to 6, in which the said magnetic stator circuit comprises the said core (5) in a central position and having P/2 poles formed by P/2 splays (7) directed towards the outside, and P/2 external columns (6) each having a pole formed by a splay (8) directed towards the inside, the transverse section of the said core and of the said excitation coil forming the said sides of the said polygon angularly opposite the said external columns and the angles of the said polygon angularly between the said external columns.

8. An actuator according to Claim 7, in which the said magnetic stator circuit comprises a column-support base (4) the said base being sized so as to allow the magnetic flux to pass.

9. An actuator according to any one of Claims 1 to 8, in which the core has a bore (13) in which the shaft-support bearings (12) are mounted.

10. An actuator according to any one of Claims 1 to 9, having an annular multipole return magnet (14) with P pairs of poles disposed between the said splays of the magnetic stator circuit and the said annular multipole magnet (10) with P pairs of poles of the magnetic rotor circuit.

11. An actuator according to Claim 10, having means of adjusting the angular position of the said annular multipole return magnet.
